# EUROPÄISCHE PATENTSCHRIFT

(11) **EP 3 095 362 B1**
(45) Veröffentlichungstag und Bekanntmachung des Hinweises auf die Patenterteilung: **23.08.2017**
(21) Anmeldenummer: 16167094.8
(22) Anmeldetag: 26.04.2016
(51) Int. Cl.: A47J 37/07

(54) **KOHLEGRILL**
CHARCOAL BARBECUE
GRIL AU CHARBON

(30) Priorität: 19.05.2015 DE 102015107796
(43) Veröffentlichungstag der Anmeldung: 23.11.2016
(73) Patentinhaber: TEPRO Garten GmbH, 63322 Rödermark (DE)
(72) Erfinder: Witsch, Carsten, 52064 Aachen (DE)
(74) Vertreter: Feucker, Max Martin

(56) Entgegenhaltungen:
- DE-A1- 2 716 521
- US-A1- 2008 087 176

## Beschreibung

Die vorliegende Erfindung betrifft einen Kohlegrill mit einem Gehäuse, das ein erstes Paar und ein zweites Paar von jeweils gegenüberliegenden Seitenwänden umfasst, einer in dem Gehäuse angeordneten Grillkohleaufnahme und einem mit mindestens einem Griff über das Gehäuse überstehenden, einen Grillgutbereich aufweisenden Grillrost, wobei ein erster Abstand zwischen der Grillkohleaufnahme und dem Grillrost durch mittelbare oder unmittelbare Auflage des Grillrosts auf von dem ersten Paar von Seitenwänden ausgebildeten Auflageabschnitten vorgegeben ist.

Bei Kohlegrills ist es wünschenswert, dass der Abstand zwischen den glühenden Kohlen in der Grillkohleaufnahme und dem Grillgut auf dem Grillrost variiert werden kann, so dass die auf das Grillgut wirkende Hitze geändert werden kann. Hierzu ist es beispielsweise bekannt, dass der in einer an einem Trägerteil ausgebildeten Gruppe von Aussparungen mit Haltebereichen eingelegte Grillrost zur Änderung des Abstandes zu den Kohlen aus der Gruppe von Aussparungen herausgenommen und in eine an dem Trägerteil darunter oder darüber angeordnete Gruppe von Aussparungen eingelegt wird, wobei die Ausrichtung des Grillrosts beibehalten wird. Insbesondere bei einem vollständig mit Grillgut belegtem Grillrost gestaltet sich das Herausnehmen des Grillrosts aus den Aussparungen und das Einlegen des Grillrosts in die Aussparungen umständlich.

Ein Kohlegrill mit den eingangs genannten Merkmalen ist aus DE 27 16 521 A1 bekannt, bei dem der Grillrost mit seinem Grillgutbereich unmittelbar auf die Seitenwände des Gehäuses auflegbar ist. Durch das Auflegen des Grillgutbereichs auf die Seitenwände werden diese verschmutzt, so dass auch die Seitenwände nach jedem Grillvorgang gereinigt werden müssen. Aus US 3,841,298 A, US 3 395 691 A und US 2008/0087176 A1 sind jeweils weitere Kohlegrills bekannt.

Aufgabe der vorliegenden Erfindung ist es daher, die mit Bezug zum Stand der Technik geschilderten Nachteile zu lösen und insbesondere einen Kohlegrill anzugeben, der weniger stark verschmutzt.

Gelöst wird diese Aufgabe durch einen Kohlegrill mit den Merkmalen des unabhängigen Anspruchs. Vorteilhafte Weiterbildungen des Kohlegrills sind in den abhängigen Ansprüchen und in der Beschreibung angegeben, wobei Merkmale der vorteilhaften Weiterbildungen in technologisch sinnvoller Weise beliebig miteinander kombinierbar sind.

Insbesondere wird die Aufgabe durch einen Kohlegrill mit den eingangs genannten Merkmalen gelöst, wobei der Grillrost mindestens zwei jeweils mittels mindestens einer Verbindungstrebe mit dem Grillgutbereich verbundene Griffe aufweist und ein zweiter Abstand zwischen der Grillkohleaufnahme und dem Grillrost durch von dem zweiten Paar von Seitenwänden ausgebildeten Auflageabschnitten vorgegeben ist, welche in vertikaler Richtung zu den an dem ersten Paar von Seitenwänden ausgebildeten Auflageabschnitten versetzt sind, so dass der Abstand zwischen der Grillkohleaufnahme und dem Grillrost durch Neuausrichtung des Grillrosts und Auflegen des Grillrosts mit den Verbindungsstreben auf die Auflageabschnitte des anderen Paares von Seitenwänden änderbar ist.

Es ist also insbesondere vorgesehen, dass an jeder Seitenwand eines Paares von sich gegenüberliegenden Seitenwänden jeweils korrespondierende Auflageabschnitte ausgebildet sind, auf die der Grillrost auflegbar ist. Die Seitenwände sind insbesondere plan ausgebildet, wobei die Seitenwände eines Paares von Seitenwänden insbesondere parallel zueinander ausgerichtet sind. Der mindestens eine Auflageabschnitt einer jeden Seitenwand ist insbesondere an einer oberen Kante der entsprechenden Seitenwand ausgebildet. Das erste an dem ersten Paar von Seitenwänden ausgebildete Paar von korrespondierenden Auflageabschnitten ist in vertikaler Richtung zu dem an dem zweiten Paar von Seitenwänden ausgebildeten zweiten Paar von korrespondierenden Auflageabschnitten versetzt. Der zunächst auf dem ersten Paar von Auflageabschnitten aufliegende Grillrost wird zum Ändern des Abstands zur Grillkohleaufnahme also bevorzugt von dem ersten Paar von Auflageabschnitten abgehoben und in der Ebene des Grillrosts verdreht und auf das zweite Paar von Auflageabschnitten an dem zweiten Paar von Seitenwänden aufgelegt. Somit kann der Abstand zwischen Grillrost und Grillkohleaufnahme auf einfache Weise geändert werden.

Die gegenüberliegenden Seitenwände sind insbesondere plan und parallel zueinander ausgerichtet, so dass das Gehäuse des Kohlegrills einen mehreckigen Querschnitt mit gerader Anzahl von Seitenwänden aufweist. Der Kohlerost weist bevorzugt einen der Querschnittsform des Gehäuses entsprechend geformten Grillgutbereich auf und steht insbesondere seitlich mit den Griffen über das Gehäuse hinaus. Der Grillrost wird mit den Verbindungsstreben zwischen den Griffen und dem Grillgutbereich auf die Auflageabschnitte der Seitenwände aufgelegt. Die Auflageabschnitte sind von den Seitenwänden insbesondere an der oberen Kante der jeweiligen Seitenwand ausgebildet, was bedeutet, dass der Grillrost, nachdem er oberhalb des Gehäuses ausgerichtet wurde, ausschließlich durch eine vertikale Bewegung auf die Auflageabschnitte aufgelegt werden kann. Es ist also nicht erforderlich, dass der Grillrost beim Auflegen linear in horizontaler Richtung bewegt werden muss. Zum Ändern des Abstands ist also insbesondere lediglich ein Anheben und Verdrehen des Grillrosts in der Grillrostebene mit anschließendem Absenken erforderlich. Bevorzugt sind an der oberen Kante der Seitenwände jeweils Einkerbungen oder Erhöhungen ausgebildet, die die Auflageabschnitte für den Grillrost vorgeben und durch die der Grillrost beim Aufliegen in seiner Position gesichert ist.

Der Grillrost kann unmittelbar auf die Auflageabschnitte der gegenüberliegenden Seitenwände aufgelegt sein, wobei sich keine zusätzlichen Elemente zwischen den Auflageabschnitten und dem Grillrost befinden. Alternativ kann aber vorgesehen sein, dass zwischen den Auflageabschnitten von gegenüberliegenden Seitenwänden und dem Grillrost jeweils ein Element angeordnet ist, so dass der Grillrost nur mittelbar mit einem vertikalen Versatz auf den Auflageabschnitten aufliegt.

Die Grillkohleaufnahme kann an dem Gehäuse unlösbar in einer vorgegebenen Position angeordnet sein. Alternativ kann vorgesehen sein, dass die Grillkohleaufnahme vertikal zu einem Kohleaufnahmebereich versetzt angeordnete Halteelemente aufweist, mit denen die Grillkohleaufnahme auf den von dem ersten Paar von Seitenwänden ausgebildeten Auflageabschnitten aufliegt, so dass wiederum der Grillrost auf den Halteelementen der Grillkohleaufnahme unmittelbar auflegbar ist. Dies bedeutet auch, dass der Abstand zwischen dem Grillrost und dem Kohleaufnahmebereich der Grillkohleaufnahme durch den vertikalen Abstand zwischen Halteelement und Grillkohleaufnahme bestimmt ist. Bevorzugt sind aber in den Halteelementen mit den Einkerbungen in den Seitenwänden korrespondierende Aussparungen ausgebildet, so dass der Grillrost im Bereich der Aussparungen unmittelbar auf den Seitenwänden in den Einkerbungen aufliegt. Eine solche Ausgestaltung hat den Vorteil, dass die mit den Halteelementen an den Seitenwänden aufgehangene Grillkohleaufnahme ebenfalls nur auf die Auflageabschnitte aufgelegt ist und somit zum Entfernen der Asche einfach aus dem Kohlegrill entnehmbar ist.

In einer Ausführungsform des Kohlegrills kann vorgesehen sein, dass ein Deckel lösbar an dem Gehäuse befestigbar ist, so dass der Kohlegrill an einem an dem Deckel ausgebildeten Trägergriff getragen werden kann, wenn der Deckel an dem Kohlegrill befestigt ist. Eine solche lösbare Befestigung des Deckels an dem Gehäuse kann insbesondere durch einen Spannbügelverschluss realisiert sein, der an dem Gehäuse befestigt ist und in einen Befestigungsbereich an dem Deckel eingreift. Selbst wenn der Kohlegrill nach dem Grillen noch eine leicht erhöhte Temperatur aufweist, kann durch eine solche lösbare Befestigung des Deckels mit dem Trägergriff eine einfache Transportierbarkeit des Kohlegrills erreicht werden.

Um eine einfache Montage des Kohlegrills zu erreichen, kann vorgesehen sein, dass das Gehäuse mehrteilig ausgebildet ist und ein Gehäuseteil jeweils eine Seitenwand vollständig ausbildet und die daran angrenzenden Seitenwände jeweils nur teilweise, insbesondere zur Hälfte. Die Gehäuseteile sind in diesem Fall mit den nur einen Teil der Seitenwände ausbildenden Bereichen aneinander befestigt.

In einer bevorzugten Ausführungsform ist vorgesehen, dass das Gehäuse in seinem Querschnitt rechteckig, bevorzugt quadratisch ist. In diesem Fall hat also auch der Grillgutbereich des Grillrosts bevorzugt eine rechteckige beziehungsweise quadratische Form, wobei insbesondere der Grillgutbereich während der Auflage des Grillrosts auf den Auflageabschnitten innerhalb des von den Seitenwänden gebildeten Gehäuses angeordnet ist.

Es kann vorgesehen sein, dass die Seitenwände ausbildenden Gehäuseteile Füße zum Aufstellen des Kohlegrills einteilig ausbilden. Auf diese Weise kann ein sehr kompakter Kohlegrill realisiert werden, da keine zusätzlichen Standbeine für die Füße vorgesehen sein müssen. Ein solch kompakter Kohlegrill ist insbesondere einfach zu transportieren und kann daher einfach zu einem beliebigen Grillplatz mitgebracht werden.

Die Erfindung sowie das technische Umfeld werden im Folgenden anhand der Figuren beispielhaft erläutert, wobei darauf hinzuweisen ist, dass die Figuren eine bevorzugte Ausführungsform der Erfindung zeigen, diese jedoch nicht darauf beschränkt ist. Es zeigen schematisch
- Fig. 1:: eine Explosionsansicht eines Kohlegrills,
- Fig. 2:: einen Kohlegrill mit einem ersten Abstand zwischen Grillrost und Grillkohleaufnahme,
- Fig. 3:: den Kohlegrill gemäß Fig. 1 mit einem zweiten Abstand zwischen Grillrost und Grillkohleaufnahme und
- Fig. 4:: den Kohlegrill gemäß Fig. 1 mit einem an einem Gehäuse lösbar befestigten Deckel.

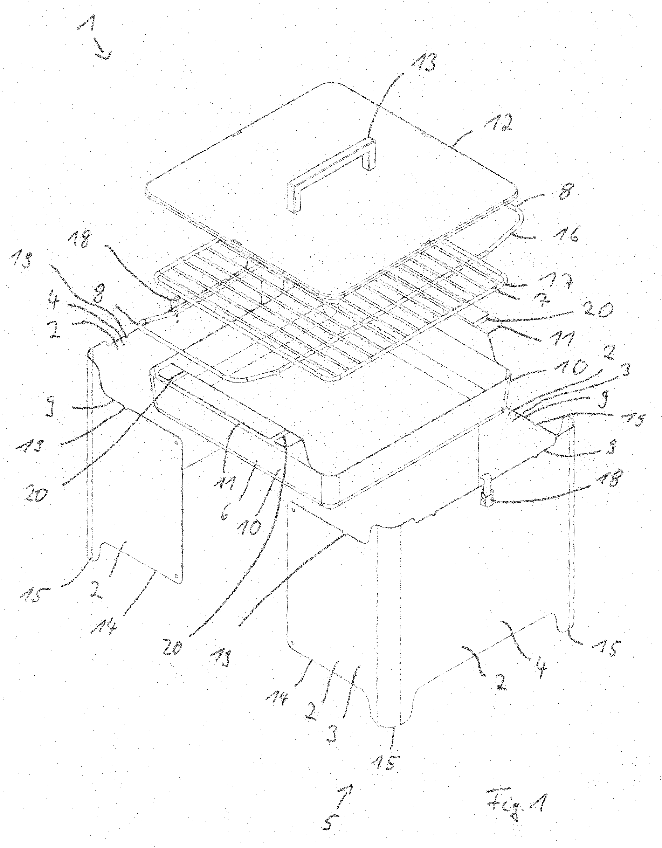

Die Figuren zeigen einen Kohlegrill 1, wobei in Fig. 1 eine Explosionsansicht des Kohlegrills 1 dargestellt ist. Der Kohlegrill 1 umfasst ein Gehäuse 5, das aus zwei Gehäuseteilen 14 besteht. Das von den Gehäuseteilen 14 gebildete Gehäuse 5 weist ein erstes Paar 3 von gegenüberliegenden Seitenwänden 2 und ein zweites Paar 4 von gegenüberliegenden Seitenwänden 2 auf. An einer oberen Seitenkante jeder Seitenwand 2 ist ein Auflageabschnitt 9 mit Einkerbungen 19 ausgebildet. In Eckbereichen der Gehäuseteile 14 sind an einer unteren Kante jeweils Füße 15 ausgebildet.

Der Kohlegrill 1 umfasst ferner eine Grillkohleaufnahme 6 mit einem Kohleaufnahmebereich 10 und Halteelementen 11. Die Halteelemente 11 sind auf Auflageabschnitte 9 von gegenüberliegenden Seitenwänden 2 auflegbar, so dass der Kohleaufnahmebereich 10 in dem Gehäuse 5 hängt. Die Halteelemente 11 weisen Aussparungen 20 auf, die mit den Einkerbungen 19 der jeweiligen Seitenwand 2 korrespondieren.

Zudem umfasst der Kohlegrill 1 einen Grillrost 7 mit seitlich über das Gehäuse 5 überstehenden Griffen 8. Die Griffe 8 sind mittels Verbindungsstreben 16 mit einem Grillgutbereich 17 des Grillrosts 7 verbunden.

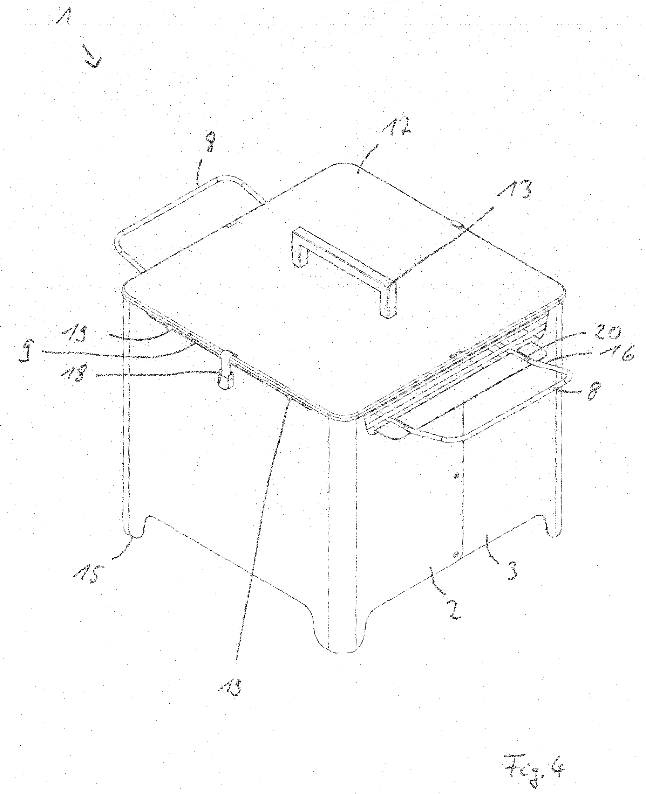

Der Kohlegrill 1 umfasst zudem einen Deckel 12 mit einem Tragegriff 13, welcher mittels an den Seitenwänden 2 befestigten Spannbügelverschlüssen 18 lösbar an dem Gehäuse 5 befestigbar ist (s. Fig. 4). Zum Transportieren des Kohlegrills 1 kann der Deckel 12 mittels der Spannbügelverschlüsse 18 an dem Gehäuse 5 somit einfach befestigt werden.

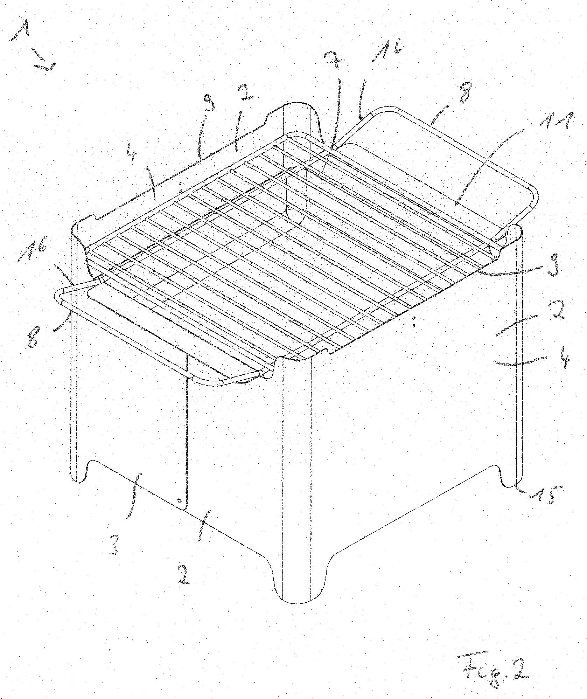

In der in Fig. 2 dargestellten Ausführungsform liegt die Grillkohleaufnahme 6 mit den Halteelementen 11 auf den an einem oberen Rand der ersten Gruppe 3 von Seitenwänden 2 ausgebildeten Auflageabschnitten 9 auf. Der Grillrost 7 wiederum liegt mit den Verbindungsstreben 16 auf den Halteelementen 11 der Grillkohleaufnahme 6 auf und somit mittelbar auf den Auflageabschnitten 9. In der Ausführungsform der Fig. 1, 3 und 4 sind in den Halteelementen 11 Aussparungen 20 ausgebildet, durch die der Grillrost 7 in die Einkerbungen 19 der Auflageabschnitte 9 der Seitenwände 2 eingelegt ist. In dieser Stellung weist der Abstand zwischen dem Grillgutbereich 17 des Grillrosts 7 und dem Kohleaufnahmebereich 10 der Grillkohleaufnahme 6 einen ersten Wert auf.

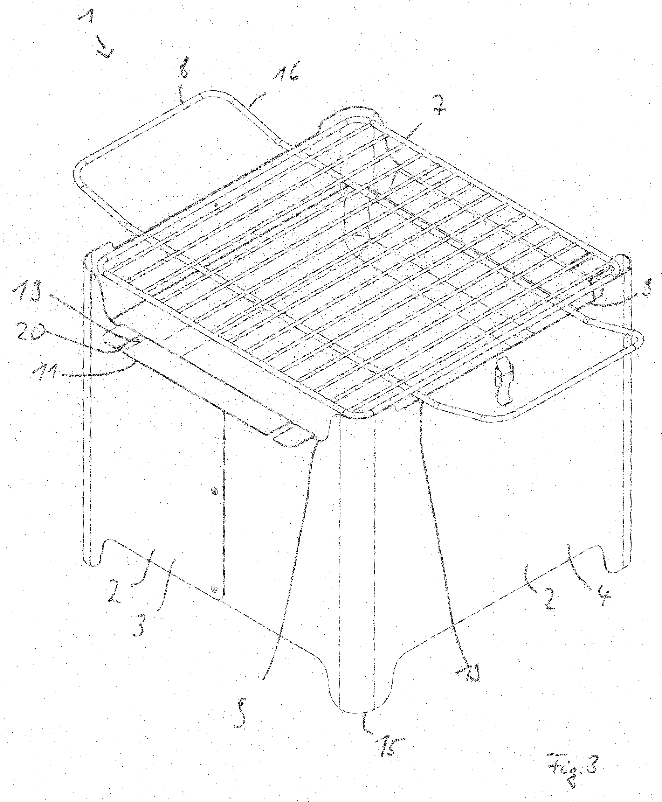

Um den Abstand zwischen dem Grillgutbereich 17 des Grillrosts 7 und dem Kohleaufnahmebereich 10 der Grillkohleaufnahme 6 zu vergrößern, wird der Grillrost 7 angehoben und um 90° in seiner Ebene gedreht und sodann auf die Auflageabschnitte 9 an dem zweiten Paar 4 von Seitenwänden 2 wieder aufgelegt. Die Auflageabschnitte 9 der Seitenwände 2 weisen gemäß der Ausführungsform der Fig. 1, 3 und 4 Einkerbungen 19 an einer oberen Kante der Seitenwände 2 auf, in die der Grillrost 7 mit den Verbindungsstreben 16 eingelegt ist. Eine solche zweite Stellung ist in Fig. 3 dargestellt. Eine Änderung des Abstands zwischen Grillrost 7 und der glühenden Kohle ist somit einfach durchzuführen.

### Bezugszeichenliste

- 1: Kohlegrill
- 2: Seitenwand
- 3: erstes Paar
- 4: zweites Paar
- 5: Gehäuse
- 6: Grillkohleaufnahme
- 7: Grillrost
- 8: Griff
- 9: Auflageabschnitt
- 10: Kohleaufnahmebereich
- 11: Halteelement
- 12: Deckel
- 13: Tragegriff
- 14: Gehäuseteil
- 15: Fuß
- 16: Verbindungsstrebe
- 17: Grillgutbereich
- 18: Spannbügelverschluss
- 19: Einkerbung
- 20: Aussparung

## Patentansprüche

1. Kohlegrill (1) mit einem Gehäuse (5), das ein erstes Paar (3) und ein zweites Paar (4) von jeweils gegenüberliegenden Seitenwänden (2) umfasst, einer in dem Gehäuse (5) angeordneten Grillkohleaufnahme (6) und einem mit mindestens einem Griff (8) über das Gehäuse (5) überstehenden, einen Grillgutbereich (17) aufweisenden Grillrost (7), wobei ein erster Abstand zwischen der Grillkohleaufnahme (6) und dem Grillrost (7) durch mittelbare oder unmittelbare Auflage des Grillrosts (7) auf von dem ersten Paar (3) von Seitenwänden (2) ausgebildeten Auflageabschnitten (9) vorgegeben ist, **dadurch gekennzeichnet, dass** der Grillrost (7) mindestens zwei jeweils mittels mindestens einer Verbindungstrebe (16) mit dem Grillgutbereich (17) verbundene Griffe (8) aufweist und dass ein zweiter Abstand zwischen der Grillkohleaufnahme (6) und dem Grillrost (7) durch von dem zweiten Paar (4) von Seitenwänden (2) ausgebildeten Auflageabschnitten (9) vorgegeben ist, welche in vertikaler Richtung zu den an dem ersten Paar (3) von Seitenwänden (2) ausgebildeten Auflageabschnitten (9) versetzt sind, so dass der Abstand zwischen der Grillkohleaufnahme (6) und dem Grillrost (7) durch Neuausrichtung des Grillrosts (7) und Auflegen des Grillrosts (7) mit den Verbindungsstreben (16) auf die Auflageabschnitte (9) des anderen Paares (3, 4) von Seitenwänden (2) änderbar ist.

2. Kohlegrill (1) nach Anspruch 1, wobei die Grillkohleaufnahme (6) vertikal zu einem Kohleaufnahmebereich (10) versetzt angeordnete Halteelemente (11) aufweist, mit denen die Grillkohleaufnahme (6) auf den von dem ersten Paar (3) von Seitenwände (2) ausgebildeten Auflageabschnitten (9) aufliegt, wobei der Grillrost (7) auf die Halteelementen (11) der Grillkohleaufnahme (6) unmittelbar auflegbar ist.

3. Kohlegrill (1) nach Anspruch 1 oder 2, wobei ein Deckel (12) lösbar an dem Gehäuse (5) befestigbar ist, so dass der Kohlegrill (1) an einem an dem Deckel (12) ausgebildeten Tragegriff (13) getragen werden kann, wenn der Deckel (12) an dem Kohlegrill (1) befestigt ist.

4. Kohlegrill (1) nach einem der vorhergehenden Ansprüche, wobei das Gehäuse (5) mehrteilig ausgebildet ist und ein Gehäuseteil (14) jeweils eine Seitenwand (2) vollständig ausbildet und die daran angrenzenden Seitenwände (2) jeweils nur teilweise, insbesondere zur Hälfte.

5. Kohlegrill (1) nach einem der vorhergehenden Ansprüche, wobei das Gehäuse (5) in seinem Querschnitt rechteckig, bevorzugt quadratisch ist.

6. Kohlegrill (1) nach einem der vorhergehenden Ansprüche, wobei die Seitenwände (2) ausbildende Gehäuseteile (14) Füße (15) zum Aufstellen des Kohlegrills (1) ausbilden.

## Claims

1. A charcoal grill (1) having a housing (5), which includes a first pair (3) of opposing side walls (2) and a second pair (4) of opposing side walls (2), a charcoal receptacle (6) arranged in the housing (5) and a cooking grid (7) having at least one handle (8) protruding beyond the housing (5) and having an area (17) for food to be grilled, wherein a first distance is provided between the charcoal receptacle (6) and the cooking grid (7) through directly or indirectly laying the cooking grid (7) on supporting sections (9) formed by the first pair (3) of side walls (2), **characterized in that** the cooking grid (7) has at least two handles (8) connected to the area (17) for grilling food by means of at least one connecting strut (16), and **in that** a second distance between the charcoal receptacle (6) and the cooking grid (7) is predefined by supporting sections (9) formed by the second pair (4) of side walls (2), these supporting sections being offset in the vertical direction from the supporting sections (9) formed on the first pair (3) of side walls (2), so that the distance between the charcoal receptacle (6) and the cooking grid (7) can be adjusted by realignment of the cooking grid (7) and placement of the cooking grid (7) with the connecting struts (16) on the supporting sections (9) of the other pair (3, 4) of side walls (2).

2. The charcoal grill (1) according to claim 1, wherein the charcoal receptacle (6) has holding elements (11) which are arranged with an offset vertically from a charcoal receiving area (10), with which holding elements (11) the charcoal receptacle (6) rests on supporting sections (9) formed by the first pair (3) of side walls (2), wherein the cooking grid (7) can be placed directly on the holding elements (11) of the charcoal receptacle (6).

3. The charcoal grill (1) according to claim 1 or 2, wherein a cover (12) is releasably attachable to the housing (5), so that the charcoal grill (1) can be supported on a carrying handle (13) formed on the cover (12) when the cover (12) is attached to the charcoal grill (1).

4. The charcoal grill (1) according to any one of the preceding claims, wherein the housing (5) is formed in multiple parts, and one housing part (14) completely forms a side wall (2) and forms each of the adjacent side walls (2) only partially, in particular half of each.

5. The charcoal grill (1) according to any one of the preceding claims, wherein the housing (5) has a rectangular cross section, preferably a square cross section.

6. The charcoal grill (1) according to any one of the preceding claims, wherein the housing parts (14) forming the side walls (2) form legs (15) for the charcoal grill (1) to stand on.

## Revendications

1. Grill à charbon de bois (1) avec un coffre (5), qui comprend une première paire (3) et une deuxième paire (4) de parois latérales (2) respectivement opposées, un réceptacle à charbon de bois pour grill (6) disposé dans le coffre (5) et une grille de grill avec au moins une poignée (8) dépassant sur le coffre (5), comportant une zone pour produits à griller (17), un premier espace entre le réceptacle de charbon de bois (6) et la grille de grill (7) étant prédéterminé par la dépose indirecte ou directe de la grille de grill (7) sur des sections de dépose (9) constituées par la première paire (3) des parois latérales (2), **caractérisé en ce que** la grille de grill (7) comporte au moins deux poignées (8) reliées respectivement au moyen au moins d'un tirant de liaison (16) à la zone de produits à griller (17) et **en ce qu'**un deuxième espace est prédéterminé entre le réceptacle de charbon de bois (6) et la grille de grill (7) par des sections de dépose (9) constituées par la deuxième paire (4) de parois latérales (2), lesquelles sont déportées en direction verticale par rapport aux sections de dépose (9) constituées sur la première paire (3) de parois latérales (2) de telle manière que l'espace entre le réceptacle de charbon de bois (6) et la grille de grill (7) peut être modifié par une nouvelle orientation de la grille de grill (7) et la dépose de la grille de grill (7) avec les tirants de liaison (16) sur les sections de dépose (9) de l'autre paire (3,4) de parois latérales (2).

2. Grill à charbon de bois (1) selon la revendication 1, le réceptacle de charbon de bois (6) comportant verticalement des éléments de fixation (11) disposés décalés verticalement par rapport à une zone de réception de charbon de bois (10) avec lesquels le réceptacle de charbon de bois (6) repose sur les sections de dépose (9) constituées par la première paire (3) de parois latérales (2), la grille de grill (7) pouvant être directement posée sur les éléments de fixation (11) du réceptacle de charbon de bois (6).

3. Grill à charbon de bois (1) selon la revendication 1 ou 2, un couvercle (12) pouvant être fixé de façon amovible sur le coffre (5) de telle manière que le grill à charbon de bois (1) peut être porté par une poignée de manutention (13) constituée sur le couvercle (12), si le couvercle (12) est fixé sur le grill à charbon de bois (1).

4. Grill à charbon de bois (1) selon l'une quelconque des revendications précédentes, le coffre (5) étant constitué en plusieurs parties et une partie de coffre (14) constituant respectivement complètement une paroi latérale (2) et les parois (2) voisines de celle-ci, respectivement seulement en partie, notamment pour moitié.

5. Grill à charbon de bois (1) selon l'une quelconque des revendications précédentes, le coffre (5) étant rectangulaire, de préférence quadratique dans sa section transversale.

6. Grill à charbon de bois (1) selon l'une quelconque des revendications précédentes, les parties de coffre (14) constituant les parois latérales (2) constituant les pieds (15) pour poser le grill à charbon de bois (1).
